# EUROPEAN PATENT APPLICATION

(11) **EP 1 973 244 A1**
(43) Date of publication of application: **24.09.2008**
(21) Application number: 07290345.3
(22) Date of filing: 19.03.2007
(51) Int. Cl.: H04B 10/158, H04L 27/22

(54) **Demodulator and method for demodulating a DQPSK-modulated optical signal**

(71) Applicant: Alcatel Lucent, 75008 Paris (FR)
(72) Inventor: Ohm, Michael, 70372 Stuttgart (DE)
(74) Representative: Rank, Christoph

(57) **Abstract**

A demodulator (1a) for demodulating a DQPSK-modulated optical signal (a(t)), comprises: a differential interferometer (4) having a first path (4.3) and a second path (4.4), delay means (4.5) for producing a temporal delay (τ) of the optical signal between the paths, and phase shifting means (4.6) for producing a phase shift (Ψ) of the optical signal between the paths, wherein the temporal delay substantially corresponds to a symbol period of the optical signal; a balanced detector (5) connected to outputs (4.7, 4.8) of the differential interferometer to produce an electrical output signal (i(t)); and a sampling unit (7.1-7.3) connected to an output of the balanced detector and adapted to sample the electrical output signal at samplings instants, kTₛ+ΔT, k = 0, 1,..., a temporal spacing of which substantially corresponds to a symbol period of the optical signal a(t)), thus producing a sampled electrical output signal, iₖ. In the proposed demodulator, the phase shift (Ψ) between the paths (4.3, 4.4) of the differential interferometer (4) is set so that the sampled electrical output signal (iₖ) has four different detectable amplitude levels (L₁-L₄).

## Description

### Background of the invention

The present invention relates to a demodulator for demodulating a DQPSK-modulated optical signal, comprising: a differential interferometer having a first path and a second path, delay means for producing a temporal delay of the optical signal between the paths, and phase shifting means for producing a phase shift of the optical signal between the paths, wherein the temporal delay substantially corresponds to a symbol period of the optical signal; a balanced detector connected to outputs of the differential interferometer to produce an electrical output signal; a sampling unit connected to an output of the balanced detector and adapted to sample the electrical output signal at samplings instants, kTₛ+ΔT, k = 0, 1,..., a temporal spacing of which substantially corresponds to the symbol period of the optical signal, thus producing a sampled electrical output signal, iₖ.

The present invention also relates to a method of demodulating a DQPSK-modulated optical signal, comprising the steps of applying the optical signal to a differential interferometer, thus producing a temporal delay and a phase shift of the optical signal between first and second paths of the differential interferometer, wherein the temporal delay substantially corresponds to a symbol period of the optical signal; converting the optical signal from the differential interferometer to an electrical output signal using a balanced detector connected to outputs of the differential interferometer; sampling the electrical output signal at samplings instants, kTₛ+ΔT, k = 0, 1,..., a temporal spacing of which substantially corresponds to the symbol period of the optical signal, thus producing a sampled electrical output signal, iₖ.

Furthermore, the present invention relates to a receiver for receiving DQPSK-modulated optical signal.

Known DQPSK receivers as described, e.g., by Griffin et al., "Optical differential quadrature phase-shift key (oDQPSK) for high capacity optical transmission", Proc. OFC 2002, pp. 367-368, with direct detection of an optical differential quadrature phase-shift keying (DQPSK) signal use a coupler, a respective plurality of optical delay-add filters (DAF); e.g., delay interferometers, and a plurality of balanced detectors with two photodiodes each, followed by binary sampling and decision (S&D) devices. In this way, the known DQPSK receiver uses a great number of optical and opto-electronical components which makes it rather expensive.

### Object of the invention

It is the object of the present invention to provide a DQPSK demodulator and a DQPSK receiver of the above-defined type as well as a method of demodulating a DQPSK-modulated optical signal which require a reduced number of optical and opto-electronical components, thus leading to a cost reduction of DQPSK receivers.

### Summary of the invention

In accordance with the present invention, the object is achieved by means of a demodulator having the features of appended patent claim 1, by means of a method having the features of the appended patent claim 8 and by means of a receiver having the features of appended patent claim 10.

According to a first aspect of the present invention the object is achieved by providing a demodulator of the above-defined type, wherein the phase shift between the paths of the differential interferometer is set or adjusted so that the sampled electrical output signal has four different detectable amplitude levels.

According to a second aspect of the present invention the object is achieved by providing a method of the above-defined type, which further comprises the step of setting or adjusting the phase shift between the first and second paths of the differential interferometer so that the sampled electrical output signal has four different detectable amplitude levels.

According to a third aspect of the present invention the object is achieved by providing a receiver for receiving a DQPSK-modulated optical signal, which comprises at least one demodulator according to said first aspect of the present invention.

Advantageous embodiments of various aspect of the present invention are mentioned in the subclaims, the wording of which is herewith incorporated by reference into the present description in order to avoid unnecessary repetition of text.

Embodiments of the present invention relate to a novel optical direct detection DQPSK receiver with only one optical delay-add filter, only one balanced detector, multilevel electrical signals, and a simple binary logic for estimating transmitted bit sequences. In this way, compared to the current state of the art optical DQPSK receiver as described, e.g., by Griffin et al., the new receiver approximately requires only half as many costly optical/opto-electronical components.

In order to achieve this, the phase shift introduced in the single DAF is chosen in such a way that the resulting electrical output signal from the balanced detector has four different amplitude levels at the sampling instants instead of only two levels as in prior art methods or devices. In this context, the term "sampling instants" refers to points in time at which the output from the balanced detector is sampled to generate a sampled electrical signal from the balanced detector electrical output signal. In the present description, the above-mentioned amplitude levels are also referred to as "detectable" amplitude levels since they are / can be detected during said sampling process, i.e., at predetermined instants. Owing to the enhanced number of amplitude levels, information comprised in the DQPSK-modulated optical signal can be retrieved without requiring a plurality of DAFs and balanced detectors as is the case with state of the art DQPSK receivers which use only two levels of the sampled electrical signal.

As will be appreciated by a person skilled in the art, any choice of the phase shift Ψ with Ψ≠ nπ/4, n = 0, 1,..., 7 leads to the required four-level amplitude signal. The optimum choice for ψ will depend on a variety of system parameters.

A preferred field of use of the present invention are scenarios in which the optical signal-to-noise ratio (OSNR) is sufficiently high, e.g., short transmission lengths.

Further advantages and characteristics of the present invention can be gathered from the following description of preferred embodiments given by way of example only with reference to the enclosed drawings. Features mentioned above as well as below can be used in accordance with the present invention either individually or in conjunction. The following description is not to be regarded as an exhaustive enumeration but rather as examples with respect to a general concept underlying the present invention.

### Brief description of the drawings

- Fig. 1: is a schematic diagram of a DQPSK receiver comprising an embodiment of the demodulator in accordance with the present invention;
- Fig. 2: is a diagram showing electrical output signal vs. phase difference for the DQPSK receiver of Fig. 1; and
- Fig. 3: is a schematic diagram of an optical signal transmission system comprising the DQPSK receiver of Fig. 1 for illustrating an embodiment of the method in accordance with the present invention.

### Detailed description

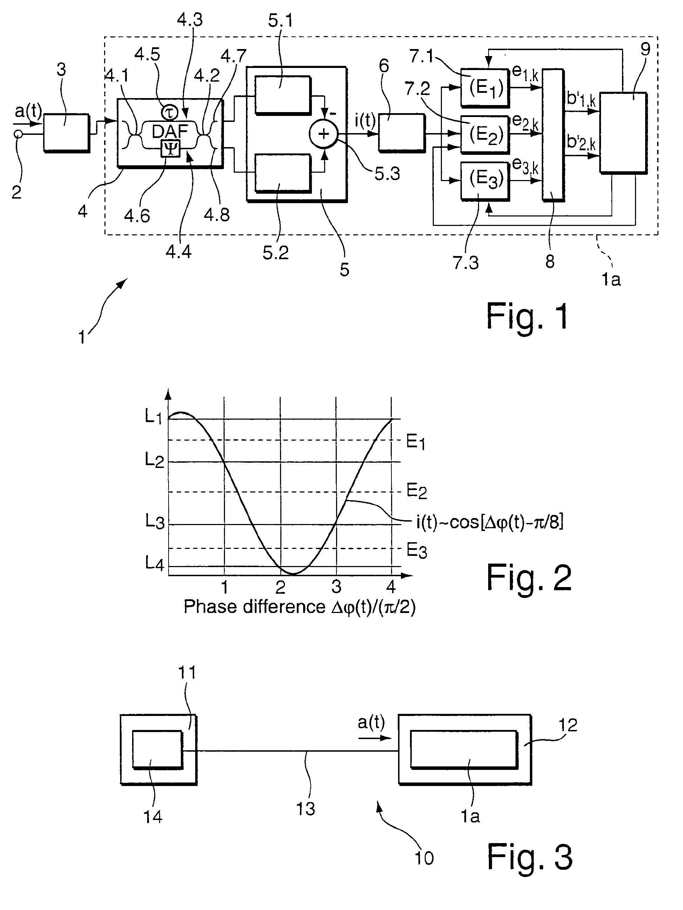

**Fig. 1** shows a schematic diagram of an embodiment of a DQPSK receiver **1** in accordance with the present invention. The DQPSK receiver 1 has an input **2** for receiving a DQPSK-modulated optical signal **a(t)** from a DQPSK optical transmitter (not shown in Fig. 1). Input 2 is connected with an optical bandpass filter **3** followed by a single delay-add filter (DAF) **4,** commonly also referred to as Mach-Zehnder delay interferometer. DAF 4 includes first and second cross couplers **4.1, 4.2** between which are comprised first and second (parallel) paths **4.3, 4.4** for the optical signal. Said first path 4.3 includes delay means **4.5** for delaying the optical signal by a time τ. Said second path includes phase-shifting means **4.6** for introducing a phase shift, Ψ, of the optical signal. Behind DAF 4 is located a balanced detector **5** having first and second photodiodes **5.1, 5.2** connected with respective outputs **4.7, 4.8** of DAF 4. Respective outputs from photodiodes 5.1, 5.2 are combined at combining means **5.3** which generates a combined electrical output signal **i(t)** ~COS[Δϕ(t)-ψ]. Balanced receiver 5 is followed by an electrical lowpass filter **6,** an output of which is connected with three sampling and decision (S&D) devices **7.1-7.3** arranged in parallel. Each of said S&D devices 7.1-7.3 is associated with a respective decision threshold Eₗ, l = 1, 2, 3. Outputs **e_{l,k}** from S&D devices 7.1-7.3 are received by a common binary logic circuit **8** followed by a threshold adaptation unit **9,** which is operatively connected with each of S&D devices 7.1-7.3.

Operation of DQPSK receiver 1 will now be explained in detail with further reference to appended Fig. 2. As with state of the art DQPSK receivers, delay means 4.3 are adapted so that a time delay τ = T_{S} is introduced to the optical signal a(t) on said first path 4.3 of DAF 4, wherein T_{S} substantially corresponds to a symbol period (symbol duration) of optical signal a(t), i.e., to the duration of one symbol (carrying two bits) in the optical DQPSK signal a(t). The phase shift Ψ in DAF 4 is chosen in such a way that the resulting electrical output signal i(t) produced by balanced detector 5 has four different amplitude levels when sampled by S&D devices 7.1-7.3. Sampling is performed at regular time intervals (sampling instants) t = kT_{S}+ΔT, wherein k = 0, 1, 2, ... In other words, sampled electrical output signal, iₖ = i(kT_{S}+ΔT), produced in each of S&D devices 7.1-7.3 takes on one of four different amplitude levels L₁-L₄, as illustrated in appended Fig. 2. ΔT determines an absolute (temporal) position of the sampling instants which may be set in order to minimize a bit error ratio (BER). Furthermore, signal i(t) is sampled according to a symbol pattern of the optical signal.

Since a sampling device is a linear element, its location within the circuit of Fig. 1 could be modified, in particular by separating it from the decision devices, so that the resulting circuit would comprise only one sampling device an output of which is connected with three decision devices.

**Fig. 2** shows a diagram showing electrical output signal vs. phase difference for the DQPSK receiver of Fig. 1. Levels L₁-L₄ depicted in Fig. 2 correspond to the above-mentioned amplitude levels of sampled electrical output signal iₖ: E₁-E₃ denote respective decision thresholds of S&D devices 7.1-7.3, which will be explained in detail further below. The solid line in Fig. 2 illustrates the electrical output signal i(t) produced by balanced detector 5.

As will be appreciated by a person skilled in the art, any choice of phase shift Ψ with Ψ≠ nπ/4, n = 0, 1,..., 7 leads to the required four-level signal. In Fig. 2 Ψ = -π/8 has been chosen for illustration purposes and without limitation. At the sampling instants t = kT_{S}+ΔT the sampled electrical output signal iₖ is proportional to one of the following values: L₁ = cos( -π/8), L₂ = cos(π/2-π/8), L₃ = cos(π-π/8), and L₄ = cos(3π/2-π/8).

In each of the S&D devices 7.1-7.3 the sampled electrical output signal (iₖ) is compared with respective decision threshold Eₗ. In accordance with said comparison, S&D devices 7.1-7.3 produce respective output signals **e_{l,k},** I = 1, 2, 3, which are applied to binary logic circuit 8. Said output signals e_{l,k} are logical output signals having a high logic value ("1") if iₖ ≥ Eₗ and a low logic value ("0") if iₖ < Eₗ. Signals e_{l,k} are then further processed by binary logic circuit 8 in order to estimate a transmitted bit sequence (b_{1,k}, b_{2,k}) comprised in the DQPSK-modulated optical signal a(t), thus producing estimated bit values **b'_{1,k}, b'_{2,k}.** The estimated bit values b'_{1,k}, b'_{2,k} are monitored by means of threshold adaptation unit 9 for achieving an optimum bit error ratio (BER). To this end, threshold adaptation unit 9 generates control signals in response to its monitoring of the estimated bit values b'_{1,k}, b'_{2,k} which are applied to S&D devices 7.1-7.3 in order to adapt a position of any one of decision thresholds Eₗ.

In the exemplary embodiment of Fig. 2, transmission thresholds Eₗ are located exactly in the middle between neighbouring amplitude levels, e.g.; L₁ and L₂ or L₃ and L₄. However, this may not always be the optimum choice, e.g., in the presence of dispersion effects on optical signal transmission. Thus, threshold adaptation unit 9 is employed to adjust the positions of decision thresholds Eₗ in order to achieve optimum BER or any other optimum characteristic of the estimated bit sequence (b'_{1,k}, b'_{2,k}).

Binary logic circuit 8 comprises simple logical elements (not shown), such as logical ORs, logical ANDs, and logical NOTs. The necessity of providing binary logic circuit 8 in order to derive the transmitted bit sequence (b_{1,k}, b_{2,k}) from the logical output signals e_{l,k} of sampling and decision devices 7.1-7.3 is largely compensated for by the fact that DQPSK receiver 1 in accordance with present invention requires only one DAF 4 and only one balanced detector 5 in contrast to known DQPSK receivers.

A concrete choice for the internal configuration of binary logic circuit 8 depends on the mapping of phase differences, Δ_{ϕk}, in the DQPSK-modulated optical signal a(t) to bit values (b_{1,k}, b_{2,k}). In other words, the internal configuration of binary logic circuit 8 will be different for different bit value encoding schemes, i.e., how phase differences in the DQPSK-modulated optical signal a(t) correspond to bit values to be transmitted.

**Fig. 3** shows a highly schematic diagram of an optical signal transmission system **10** comprising the DQPSK receiver 1 of Fig. 1 for illustrating an embodiment of the method in accordance with the present invention. The optical signal transmission 10 generally comprises an optical transmitter **11** and an optical receiver **12,** e.g., DQPSK receiver 1 of Fig. 1, connected by means of an optical signal transmission path or medium **13.** Receiver 12 comprises the DQPSK modulator 1 a of Fig. 1; transmitter 11 comprises a precoder unit **14.** Precoder unit 14 is used to set the mapping of phase differences Δϕₖ to bit values (b_{1,k}, b_{2,k}), as already stated above. According to a standard form of said phase difference mapping, wherein a phase difference Δϕₖ = 0 corresponds to bit values (1, 1), phase difference Δϕₖ = π/2 corresponds to bit values (1, 0), phase difference Δϕₖ = π corresponds to bit values (0, 0), and a phase difference Δϕₖ = 3π/2 corresponds to bit values (1, 0), the following truth table (Table 1) for binary logic circuit 8 in Fig. 1 can be created:

**Table 1: Truth table for binary logic**

| Δϕₖ | iₖ | e_{1,k} | e_{2,k} | e_{3,k} | b_{1,k} | b_{2,k} |
|---|---|---|---|---|---|---|
| 0 | L₁ | 1 | 1 | 1 | 1 | 1 |
| π/2 | L₂ | 0 | 1 | 1 | 0 | 1 |
| π | L₄ | 0 | 0 | 0 | 0 | 0 |
| 3π/2 | L₃ | 0 | 0 | 1 | 1 | 0 |

According to Table 1, an estimated bit sequence can be derived from b'_{1,k} = e_{1,k} + e̅_{2,k}· e_{3,k} and b'_{2,k} = e_{2,k}, wherein "+" denotes logical OR, "." denotes logical AND, and "-" denotes logical NOT.

However, by modifying the mapping of phase difference Δϕₖ two bit values (b_{1,k}, b_{2,k}) by suitably modifying precoder unit 14 in Fig. 3, the required functions of binary logic circuit 8 (Fig. 1) can be simplified. The following Table 2 is a modified truth table corresponding to a different phase difference mapping:

**Table 2: Modified truth table for binary logic**

| Δϕₖ | iₖ | e_{1,k} | e_{2,k} | e_{3,k} | b_{1,k} | b_{2,k} |
|---|---|---|---|---|---|---|
| 0 | L₁ | 1 | 1 | 1 | 1 | 1 |
| π/2 | L₂ | 0 | 1 | 1 | 0 | 1 |
| π | L₄ | 0 | 0 | 0 | 1 | 0 |
| 3π/2 | L₃ | 0 | 0 | 1 | 0 | 0 |

As can easily be gathered from the marked cells in Table 2, the mapping of phase differences Δϕₖ = π and Δϕₖ = 3π/2 have been exchanged. In this way, the simplified functions of the binary logic are b'_{1.k} = e_{1.k} + e̅_{3,k} and b'_{2,k} = e_{2,k}. In this way, the binary logic according to table 3 does not require use of a logical AND.

As will be appreciated by a person skilled in the art, phase difference mapping is not restricted to the exemplary embodiments according to Tables 1 and 2.

In this way, the DQPSK receiver and DQPSK demodulator in accordance with the present invention only require use of one DAF and two photodiodes in contrast to two DAFs and four photodiodes required for state of the art DQPSK receivers / demodulators. Since these elements are most relevant to the overall cost of the DQPSK receivers / demodulators, the need for additional sampling and decision devices as well as binary logic circuits is easily compensated.

## Claims

1. A demodulator (1a) for demodulating a DQPSK-modulated optical signal (a(t)), comprising:
a differential interferometer (4) having a first path (4.3) and a second path (4.4), delay means (4.5) for producing a temporal delay (τ) of the optical signal between the paths, and phase shifting means (4.6) for producing a phase shift (Ψ) of the optical signal between the paths, wherein the temporal delay substantially corresponds to a symbol period (T_{S}) of the optical signal;
a balanced detector (5) connected to outputs (4.7, 4.8) of the differential interferometer to produce an electrical output signal (i(t));
a sampling unit (7.1-7.3) connected to an output of the balanced detector and adapted to sample the electrical output signal at samplings instants, kTₛ+ΔT, k = 0, 1,..., a temporal spacing of which substantially corresponds to the symbol period (T_{S}) of the optical signal a(t)), thus producing a sampled electrical output signal, iₖ;
**characterized in that**
the phase shift (Ψ) between the paths (4.3, 4.4) of the differential interferometer (4) is set so that the sampled electrical output signal (iₖ) has four different detectable amplitude levels (L₁-L₄).

2. The demodulator (1a) of claim 1, **characterized in that** the phase shift, Ψ, is set in accordance with Ψ ≠ n·π, n = 0, 1,..., 7.

3. The demodulator (1a) of claim 1, **characterized in that** the sampling unit comprises three sampling and decision devices (7.1-7.3) having respective decision thresholds, Eₗ, I=1,2,3, wherein the sampling and decision devices (7.1-7.3) are adapted to generate a respective logical output signal, e_{l,k}, having a first logic value if iₖ ≥ Eₗ and a second logic value if iₖ < Eₗ.

4. The demodulator (1a) of claim 3, **characterized by** a logic unit (8) receiving the logical output signals, e_{l,k}, wherein the logic unit (8) is adapted to derive an estimated bit sequence (b'_{1,k}, b'_{2,k}) of the modulated optical signal (a(t)) from a logilogical combination of the logical output signals, e_{l,k}.

5. The demodulator (1a) of claim 4, **characterized in that** the logic unit (8) is a binary logic unit adapted for binary logical combination of the logical output signals, e_{l,k}.

6. The demodulator (1a) of claim 4, **characterized by** a threshold adaptation unit (9) for adapting a number of the decision thresholds (Eₗ) in response to a characteristic, in particular a bit error ratio, BER, of the estimated bit sequence (b'_{1.k}, b'_{2,k}).

7. A method of demodulating a DQPSK-modulated optical signal (a(t)), comprising the steps of:
applying the optical signal to a differential interferometer (4), thus producing a temporal delay (τ) and a phase shift (Ψ) of the optical signal between first and second paths (4.3, 4.4) of the differential interferometer, wherein the temporal delay (τ) substantially corresponds to a symbol period (Tₛ) of the optical signal (a(t));
converting the optical signal from the differential interferometer (4) to an electrical output signal (i(t)) using a balanced detector (5) connected to outputs (4.7, 4.8) of the differential interferometer;
sampling the electrical output signal (i(t)) at samplings instants, kTₛ+ΔT, k = 0, 1,..., a temporal spacing of which substantially corresponds to a symbol period (Tₛ) of the optical signal, thus producing a sampled electrical output signal, iₖ;
**characterized by**
setting the phase shift (Ψ) between the first and second paths (4.3, 4.4) of the differential interferometer (4) so that the sampled electrical output signal (iₖ) has four different detectable amplitude levels (L₁-L₄).

8. The method of claim 7, further comprising:
comparing the amplitude levels (L₁-L₄) of the sampled electrical output signal (iₖ) with three different decision thresholds, Eₗ, I = 1, 2, 3;
generating a respective logical output signal, e_{l,k}, having a first logic value if iₖ ≥ Eₗ and a second logic value if iₖ < Eₗ; and
deriving an estimated bit sequence (b'_{1,k},b'_{2,k}) of the modulated optical signal (a(t)) from a logical combination of the logical output signals, e_{1.k}.

9. The method of claim 8, further comprising:
setting a mapping of phase differences (Δϕₖ) of the optical signal (a(t)) to bit values, in particular in a precoder unit (14), in order to achieve a reduced complexity of said logical combination of the logical output signals, e_{l,k}.

10. A receiver (1) for receiving a DQPSK-modulated optical signal (a(t)), comprising at least one demodulator (1 a) according to claim 1.
